# EUROPEAN PATENT SPECIFICATION

(11) **EP 1 187 365 B1**
(45) Date of publication and mention of the grant of the patent: **12.04.2006**
(21) Application number: 01307393.7
(22) Date of filing: 30.08.2001
(51) Int. Cl.: H04B 7/08, H04L 27/26

(54) **OFDM receiving apparatus with antenna diversity**
OFDM-Empfangsvorrichtung mit Antennandiversität
Dispositif de réception OFDM avec diversité d'antennes

(30) Priority: 07.09.2000 JP 2000272138
(43) Date of publication of application: 13.03.2002
(73) Proprietor: ALPS ELECTRIC CO., LTD., Ota-ku Tokyo 145 (JP)
(72) Inventor: Otaki, Yukio, Otsuka-cho, Ota-ku, Tokyo 145 (JP)
(74) Representative: Kensett, John Hinton

(56) References cited:
- EP-A- 0 700 184
- EP-A- 0 921 646
- US-A- 5 757 866
- US-A- 5 933 421
- OKADA M ET AL: "A joint frequency and space diversity scheme for OFDM" VEHICULAR TECHNOLOGY CONFERENCE, 1999. VTC 1999 - FALL. IEEE VTS 50TH AMSTERDAM, NETHERLANDS 19-22 SEPT. 1999, PISCATAWAY, NJ, USA,IEEE, US, 19 September 1999 (1999-09-19), pages 2939-2943, XP010353353 ISBN: 0-7803-5435-4

## Description

The present invention relates to receiving apparatuses for OFDM-modulated signals, such as those for terrestrial digital TV broadcasting in Japan and Europe, and more particularly, to a diversity-receiving-type OFDM receiving apparatus suited to on-vehicle purposes.

These years, an orthogonal frequency division multiplexing (OFDM) multi-carrier (multiple-carrier) modulation method has been being made commercial as a transfer (modulation) method for video signals and digital audio signals typical of which are those for terrestrial digital TV broadcasting. In broadcasting employing this modulation method, encoded data is divided, assigned to a thousand carriers to thousands of carriers, multiplexed, and transferred.

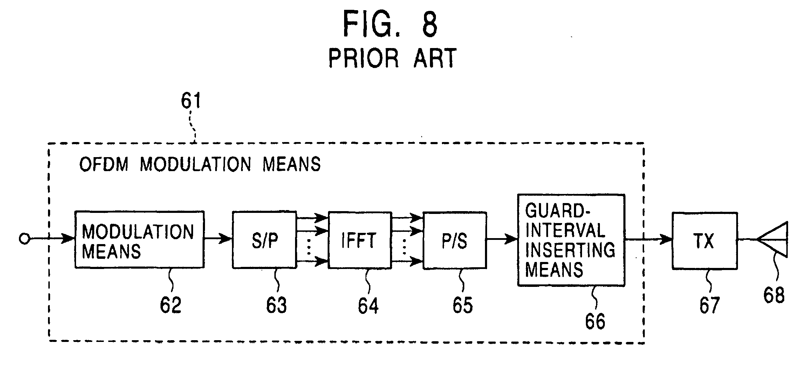

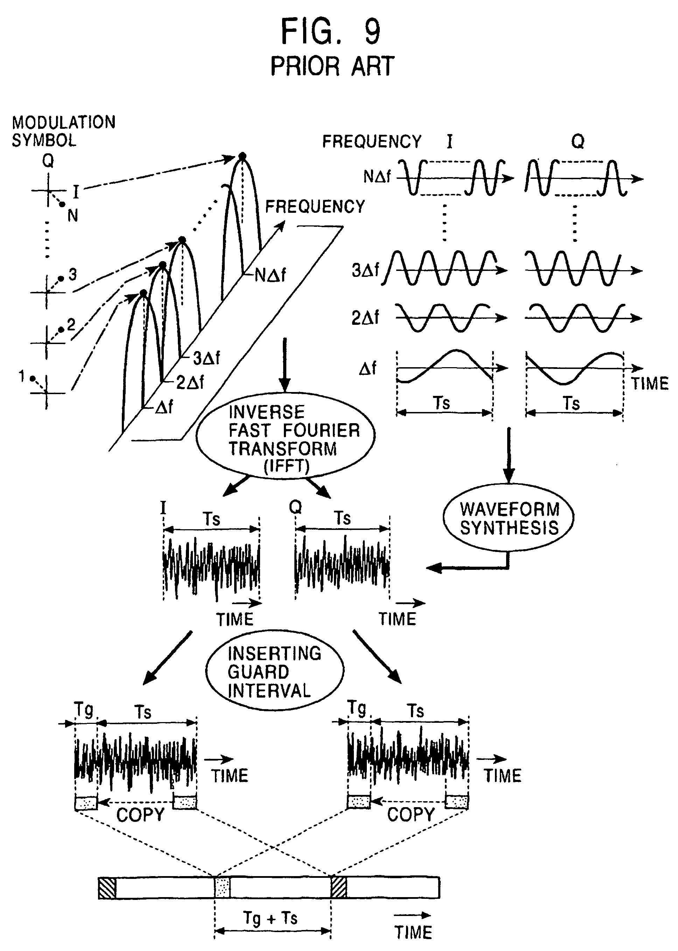

Fig. 8 is a block diagram of the structure of an OFDM transmission apparatus. Fig. 9 is a view showing an outlined OFDM modulation process.

In Fig. 8, OFDM modulation means 61 is formed of modulation means 62 for modulating an input digital signal by, for example, a QPSK method, serial/parallel converting means (S/P) 63 for converting a modulated serial signal to a parallel signal, inverse fast Fourier transform (IFFT) means 64 for applying inverse Fourier transform to a converted parallel signal, parallel/serial converting means (P/S) 65 for converting an inverse-Fourier-transformed signal to a parallel sequence and outputting it as a time signal, and guard-interval inserting means 66 for inserting a guard interval into a converted signal. There are also shown transmission means (TX) 67 and an antenna 68.

In the above structure, an input digital signal is modulated by a predetermined modulation method (such as the QPSK modulation method) by the modulation means 62 to obtain modulation symbols. The modulation symbols are converted by the serial/parallel converting means (S/P) 63 to a lower-speed modulation-symbol sequence, namely, to a modulation-symbol sequence of N carriers orthogonal to each other and arranged at a constant frequency interval (Δf). The inverse fast Fourier transform means (IFFT) 64 applies inverse fast Fourier transform (IFFT) to this modulation-symbol sequence, and then, the parallel/serial converting means (P/S) 65 synthesizes waveforms to generate the in-phase component (hereinafter called I) and the quadrature phase component (hereinafter called Q) orthogonal to each other of a time-axis signal.

Then, the guard-interval inserting means 66 copies predetermined time (guard interval period) components Tg disposed at the ends of partitioned signals having a predetermined time (effective symbol period) Ts, to the starting sections of the components I and Q of the time-axis signal as guard symbols. The time-axis signal to which the guard symbols have been inserted is output from the guard-interval inserting means 66 as a base-band time-sequential signal.

The guard symbols are inserted as a countermeasure for delay-wave disturbance (interference) caused at receiving, and absorbs adjacent symbol interference caused by a relative signal delay under a multi-path environment.

The time-axis signal corresponding to (Tg + Ts) is handled as one OFDM symbol. Receiving processing removes the guard symbols to extract the signal corresponding to Ts only as an effective-symbol signal and demodulated.

The base-band time-sequential signal generated by the guard-interval inserting means 66 is superposed on a predetermined carrier by the transmission means (TX) 67 which includes D/A conversion means, amplified in power, and emitted to the air through the antenna 68.

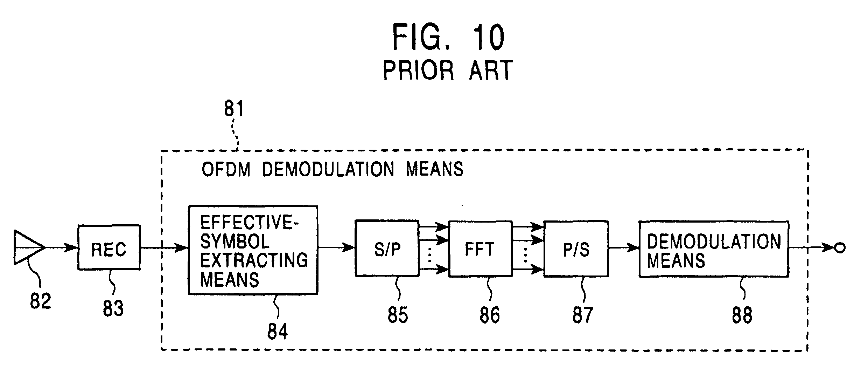

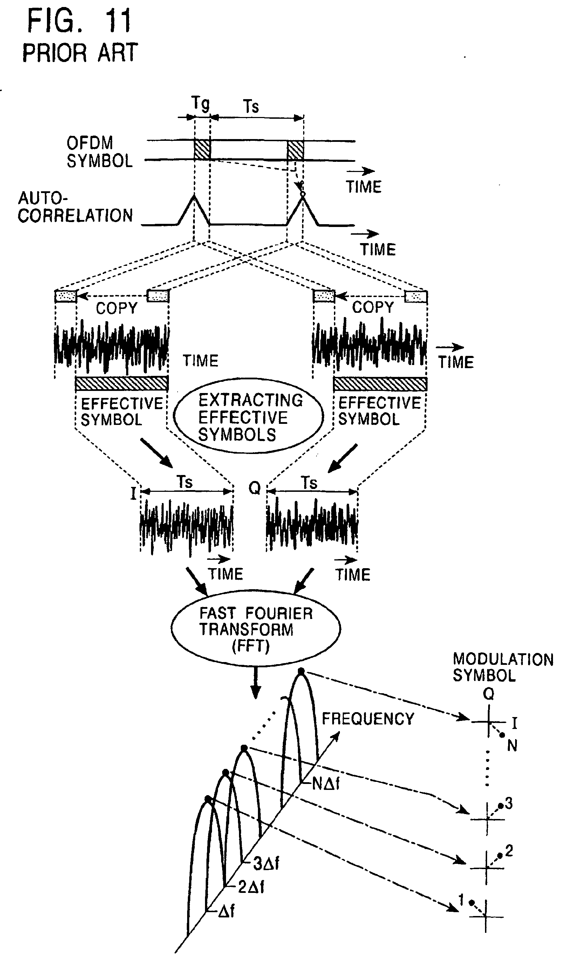

Fig. 10 shows the structure of a basic OFDM receiving apparatus. Fig. 11 shows an outlined OFDM demodulation process.

In Fig. 10, an OFDM receiving apparatus has an antenna 82, receiving means (REC) 83, and OFDM demodulation means 81.

The OFDM demodulation means 81 includes effective-symbol extracting means 84 for removing guard symbols from a received signal to extract an effective-symbol signal, serial/parallel converting means (S/P) 85 for converting the effective-symbol signal to a parallel signal, fast Fourier transform means (FFT) 86 for applying Fourier transform to the parallel signal, parallel/serial converting means (P/S) 87 for converting to a serial signal, and demodulation means 88.

In Fig. 10, a signal electric wave captured by the antenna 82 is amplified and frequency-converted by the receiving means (REC) 83, and output as a base-band time-sequential signal, and demodulated by the OFDM demodulation means 81.

In the OFDM demodulation means 81, as shown in Fig. 11, the effective-symbol extracting means 84 refers to received OFDM symbols, calculates for Tg the sum of products of two symbol signals separated by Ts to generate an auto-correlation signal, and uses it as a reference signal. Then, the effective-symbol extracting means 84 detects the peak (maximum value) of the reference signal (auto-correlation signal) of the OFDM symbols, detects the starting time of the inserted guard symbols according to the peak of the auto-correlation signal, and removes the guard symbols to extract I and Q of effective symbols.

Then, the serial/parallel converting means (S/P) 85 converts the effective symbol signal to a parallel signal, and the fast Fourier transform means (FFT) 86 applies fast Fourier transform (FFT) to the parallel signal to take out N carrier modulation symbols having frequencies shifted by Δf from each other. The taken-out modulation symbols are converted to a serial time sequence by the parallel/serial converting means (P/S) 87, and then, demodulated by a predetermined method by the demodulation means 88 to obtain a digital signal.

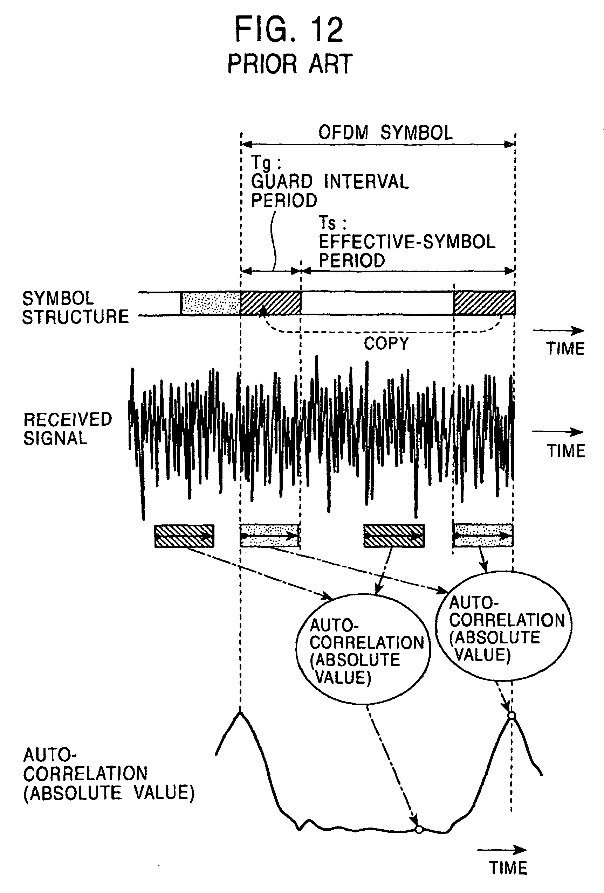

As described above, the effective-symbol extracting means 84 removes the guard interval signals inserted in the modulation process, and the Fourier transform means (FFT) 86 extracts effective symbols to be converted. Since the guard interval signals have been obtained by copying a part of effective symbols, the correlation (auto-correlation) between the received OFDM modulation signal and the signal obtained by delaying it for a predetermined period (effective symbol period) is obtained for the guard interval period, and effective symbols are extracted with the time corresponding to the correlation peak being used as a reference (see Fig. 12).

If the auto-correlation signal serving as the reference is not accurately extracted, a bit error occurs after demodulation since extracted effective symbols include OFDM symbol data adjacent thereto.

Especially in an on-vehicle OFDM receiving apparatus, fading occurs depending on a surrounding environment (such as buildings and land shapes) during the movement of the vehicle, and the effects of level changes caused by fading prevents the reference signal from being accurately generated. Therefore, during receiving while moving, diversity receiving is employed to suppress level changes in many cases.

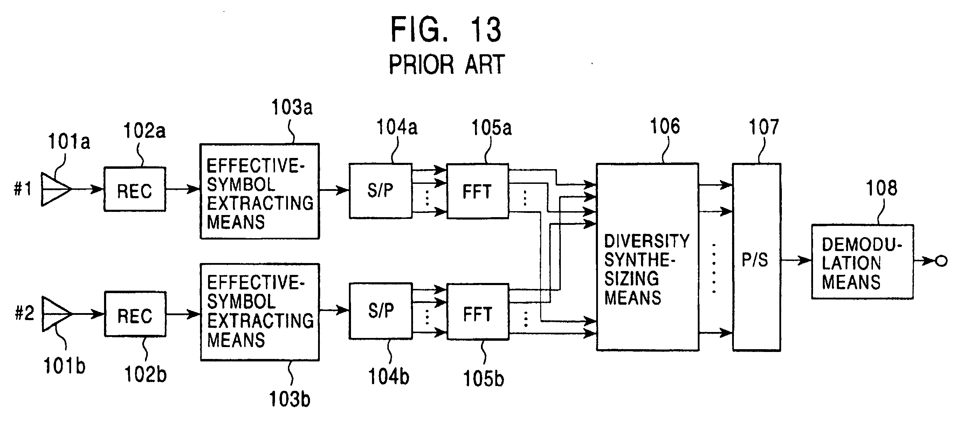

Fig. 13 shows the structure of a conventional OFDM receiving apparatus structured in order to prevent the effects of the level changes of a received signal, caused by fading which occurs during mobile communication. For convenience of a description, Fig. 13 shows an OFDM receiving apparatus having two receiving systems which include antennas.

In the structure of the OFDM receiving apparatus shown in Fig. 13, the structure from an antenna 101a to fast Fourier transfer means (FFT) 105a (the structure from an antenna 101b to fast Fourier transform means (FFT) 105b also) is the same as that from the antenna 82 to the fast Fourier transform means (FFT) 86 shown in Fig. 10.

The OFDM receiving apparatus shown in Fig. 13 includes diversity synthesizing means 106, parallel/serial converting means (P/S) 107, and demodulation means 108 after the fast Fourier transform means (FFT) 105a (fast Fourier transform means (FFT) 105b).

In the above structure, a signal received by the antenna 101a is amplified by receiving means (REC) 102a. The maximum auto-correlation value is detected by effective-symbol extracting means 103a to remove the guard symbol to extract an effective symbol signal. The signal is converted to a parallel signal by serial/parallel converting means (S/P) 104a. The fast Fourier transform means (FFT) 105a applies Fourier transform, and each carrier signal is output to the diversity synthesizing means 106.

In the same way, a signal received by the antenna 101b is amplified by receiving means (REC) 102b. The maximum auto-correlation value is detected by effective-symbol extracting means 103b to remove the guard symbol to extract an effective symbol signal. The signal is converted to a parallel signal by serial/parallel converting means (S/P) 104b. The fast Fourier transform means (FFT) 105b applies Fourier transform, and each carrier signal is output to the diversity synthesizing means 106.

The diversity synthesizing means 106 compares the received levels of each carrier in the two receiving systems, selects the carrier having a larger level, and outputs the modulation symbol thereof to the parallel/serial converting means (P/S) 107. The parallel/serial converting means 017 converts the input modulation symbol to a serial signal and the demodulation means 108 demodulates the signal.

In the above structure, since the effective-symbol extracting means 103a (103b) for each antenna uses a signal obtained before the diversity effect is obtained to generate an auto-correlation signal serving as a reference, in the same way as in the conventional OFDM receiving apparatus, the auto-correlation signal is not accurately detected when fading occurs, and as a result, an effective symbol is not accurately extracted, either. In other words, since effective symbols including an adjacent OFDM signal are diversity-synthesized after FFT, the diversity effect is not sufficient, and a bit error occurs after demodulation.

In addition, FFT circuits having a large circuit scale need to be prepared correspondingly to the number of antennas, the entire receiving circuit becomes complicated when a diversity system having a number of antennas is structured.

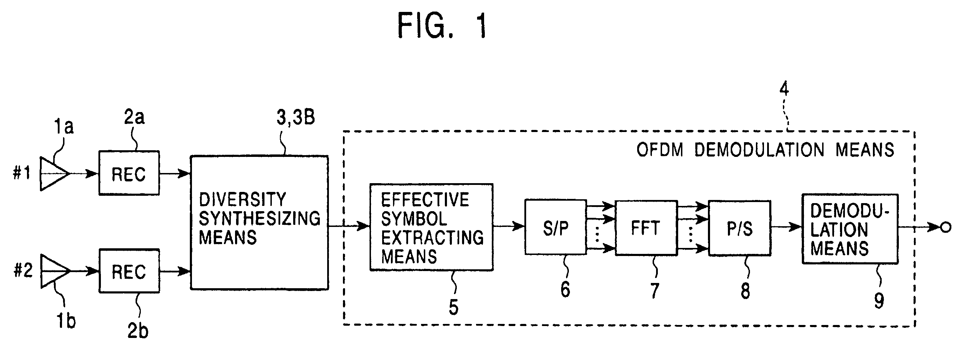

To solve the foregoing problem, the inventor has already proposed an OFDM receiving apparatus which diversity-synthesizes OFDM signals before effective symbols are extracted (in Japanese Unexamined Patent Application Publication No. Hei-11-291693). Fig. 1 is a block diagram of the structure of an OFDM receiving apparatus according to an embodiment of an invention proposed by the present inventor, and is also a block diagram of the structure of an OFDM receiving apparatus according to an embodiment of the present invention. Two antennas are used in the structure. As shown in Fig. 1, receiving antennas 1a (1b) and receiving means 2a (2b) are provided in parallel according to the number (2) of antennas in the same way as in the conventional diversity receiving apparatus, but only one piece of OFDM demodulation means 4 is required irrespective of the number of antennas in the same way as in the known OFDM receiving apparatus (Fig. 10).

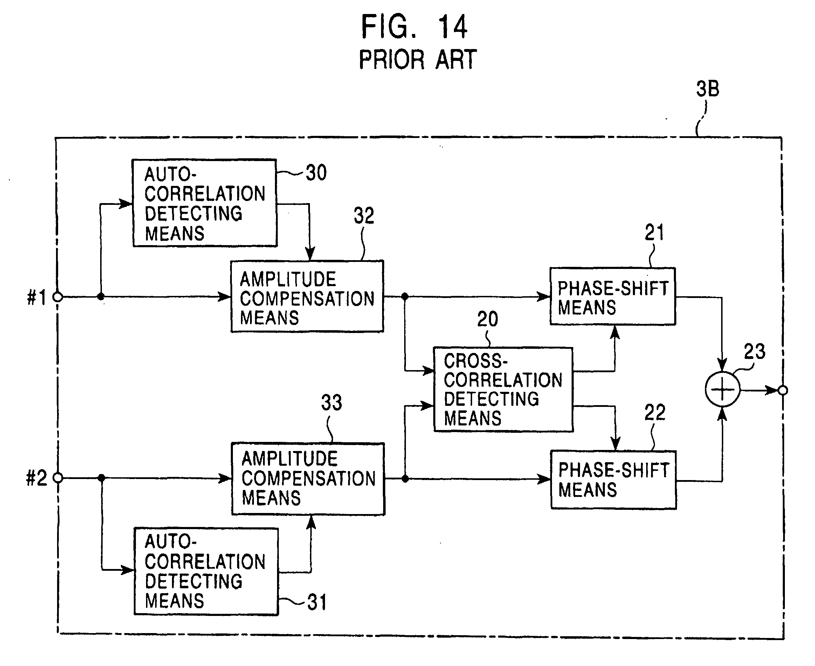

Fig. 14 is a block diagram showing the structure of a diversity synthesizing means 3B in an OFDM receiving apparatus according to an embodiment of an invention proposed by the present inventor. The diversity synthesizing means 3B is formed of auto-correlation detecting means 30 and 31 for calculating amplitude compensation coefficients according to the auto-correlation of a signal received by each antenna, amplitude compensation means 32 and 33 for weighting the amplitudes of received signals by calculated amplitude compensation coefficients, cross-correlation detecting means 20 for calculating phase compensation coefficients according to the cross-correlation of the outputs of the amplitude compensation means 32 and 33, phase-shift means 21 and 22 for rotating the phases of the outputs of the amplitude compensation means 32 and 33 according to calculated phase compensation coefficients, and adder means 23 for adding the outputs of the phase-shift means 21 and 22.

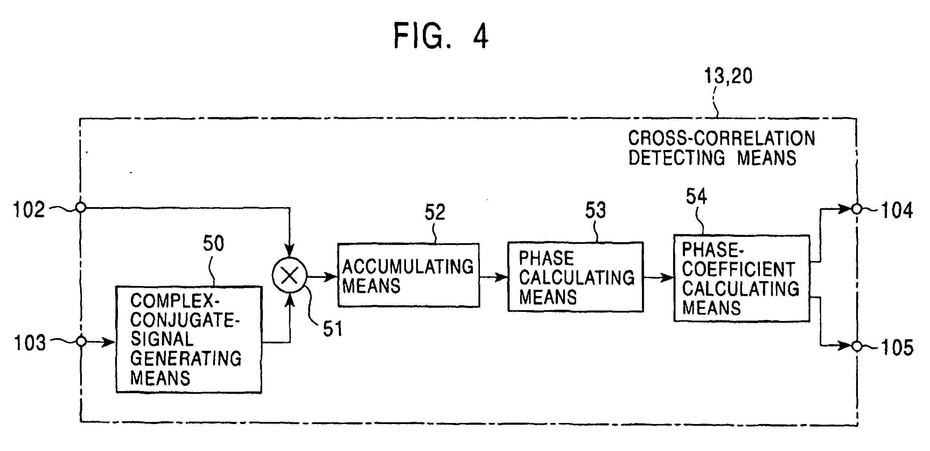

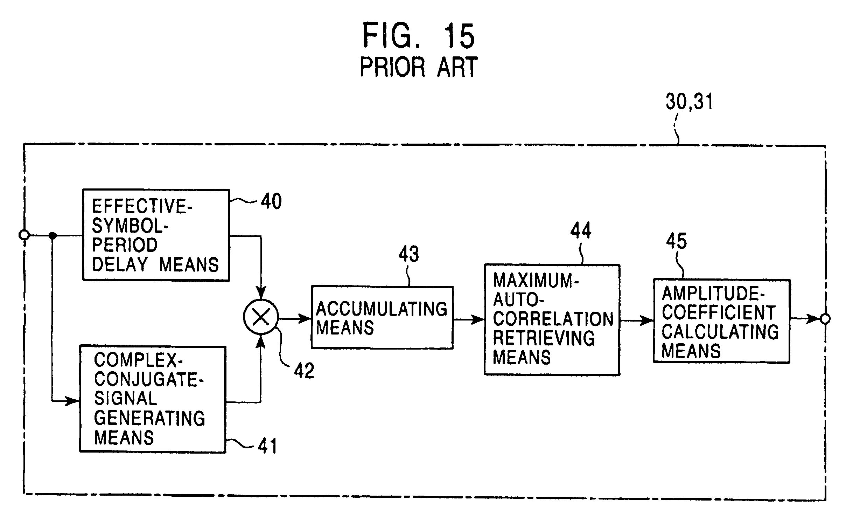

Fig. 15 is a block diagram showing the specific structure of the auto-correlation detecting means 30 (31). Fig. 4 is a block diagram showing the specific structure of the cross-correlation detecting means 20, and is also a block diagram showing the structure of cross-correlation detecting means in an OFDM receiving apparatus according to an embodiment of the present invention.

In the auto-correlation detecting means 30 (31) shown in Fig. 15, complex-conjugate-signal generating means 41 obtains the complex conjugate of an input received signal, and effective-symbol-period delay means 40 delays for an effective-symbol period. A delayed signal and the complex conjugate signal are multiplied by multiplying means 42, and its output is accumulated for a constant time (guard interval period) by accumulating means 43 to calculate auto-correlation.

When the copy source signal partially used as the guard interval among the effective symbols of an OFDM signal is input as a received signal, since the signal in which only the effective symbols are delayed serves as the copy destination signal, the auto-correlation signal obtained by accumulating them has a peak. Then, maximum-auto-correlation retrieving means 44 retrieves the maximum value of the auto-correlation signal, and amplitude-compensation-coefficient calculating means 45 calculates amplitude compensation coefficients proportional to the maximum value.

Fig. 4 shows the structure of cross-correlation detecting means in the diversity synthesizing means 3B shown in Fig. 14. Fig. 4 also shows the structure of cross-correlation detecting means according to the present invention. In the cross-correlation detecting means 20 shown in Fig. 4, multiplying means 51 multiplies a signal received by one antenna by the complex conjugate signal of a signal received by the other antenna, and accumulating means 52 accumulates the output thereof for a constant period (guard interval period) to calculate cross-correlation. Since the phase of the cross-correlation obtained in this way indicates the phase difference between the two received signals, phase calculating means 53 calculates the phase difference, and then, phase-coefficient calculating means 54 calculates phase coefficients (phase rotation coefficients) used for making the signals have the same phase.

According to the amplitude coefficients and the phase coefficients obtained as described above, the amplitude compensation means 32 and 33 compensate the amplitudes in proportion to the strengths of the signals received by the antennas, the phase shift means 21 and 22 compensate the phase such that they are the same, and then the adder means 23 adds the signals. Then, the diversity effect is obtained, in which the carrier-power to noise-power ratio (C/N) of a synthesized signal is made maximum.

The effective-symbol-period delay means 40 included in the auto-correlation detecting means 30 (31) is actually formed of a semiconductor memory as a main component. A circuit for controlling the input and output thereof is required and a control method is complicated.

More specifically, control signals such as an address and a writing/reading strobe, needs to be generated to input and output data. In addition, since input and output need to be performed at the same time, the control signals need to be generated at a speed twice as high as an input-and-output-data rate or more. Furthermore, since a reference clock for a circuit for generating the control signals is fast, signal-timing control is complicated.

A published document entitled "OKADA M ET AL: "A joint frequency and space diversity scheme for OFDM" VEHICULAR TECHNOLOGY CONFERENCE, 1999. VTC 1999 - FALL. IEEE VTS 50^{TH} AMSTERDAM, NETHERLANDS 19-22 SEPT. 1999, PISCATAWAY, NJ, USA, IEEE, US, 19 September 1999 (1999-09-19), pages 2939-2943, ISBN: 07-7803-5435-4" proposes a new joint frequency and space diversity scheme for OFDM (Orthogonal Frequency Division Multiplexing), which combines the received signals before discrete Fourier transformation (DFT). Although the conventional space diversity scheme, which combines the signals after DFT, is optimum to maximise the signal-to-noise power ratio after combining, it requires huge computational cost. The proposed diversity scheme can reduce the computational cost with small performance degradation.

US Patent No. 5757866 discloses a diversity receiver respectively receiving signals in two branches and includes two demodulating sections for producing respective amplitude and phases of received signals at a unit of symbol. The receiver includes a memory access section for producing an amplitude ratio of the amplitude of the received signals and a phase difference between the phases of the received signals. The receiver further includes a storage section for storing at least one relative phase difference between a phase of a vector-combined signal combined based on the received signals and one of the phases of the received signals for an address given by the amplitude ratio and the phase difference of the received signals. The phase of the vector-combined signal is previously calculated based on the amplitude ratio, the phase difference, and the one of the phases of the received signals. The receiver further includes an adding section for adding the relative phase difference produced from the storage section being addressed by the amplitude ratio and the phase difference produced from the memory access section to the one of the phases of the received signals to produce the phase of the vector-combined signal combined based on the received signals.

European Patent No. 0700184 describes a diversity receiver having antennas provided for respective branches. Each of the antennas generates a branch signal by receiving a radio signal through a radio signal path. The paths are different from each other. A reliability extraction circuit is provided to extract the reliability information of respective branch signals from them during an observation period. The observation period is set such that the radio signal paths appear to be equivalent to white noise Gaussian transmission paths, regardless of the occurrence of fading. Normally, the observation period is sufficiently shorter than a variance period of the branch signals due to the fading. After extracting the reliability information, weights for the respective branch signals are determined on the basis of the reliability information. The branch signals are linearly combined in accordance with the weights, and the signal thus obtained is output. As the reliability information, probability information are available. The probability information can be obtained on the basis of envelope levels or carrier power to noise power ratios of the branch signals.

It is an object of the present invention to provide an improved OFDM receiving apparatus.

According to the present invention there is provided an OFDM receiving apparatus comprising: a plurality of antennas disposed apart from each other for capturing OFDM-modulated signals; diversity synthesizing means for synthesizing the output signals of the plurality of antennas; and wherein the diversity synthesizing means comprises a plurality of electric-power detecting means for detecting a signal electric power of the output signals of the plurality of antennas, respectively; wherein the diversity synthesizing means further comprises amplitude-coefficient calculation means for receiving the signal electric power from the plurality of electric-power detecting means and for calculating amplitude compensation coefficients corresponding to the magnitudes of the signal electric power from the plurality of electric-power detecting means every time the signal electric power is calculated by the plurality of electric-power detecting means so as to output the calculated amplitude compensation coefficients; and wherein the diversity synthesizing means further comprises a plurality of amplitude compensation means for receiving the output signals of the plurality of receiving means and the calculated amplitude compensation coefficients, wherein the OFDM receiving apparatus is characterised by a plurality of receiving means connected to the plurality of antennas, respectively, for frequency-converting and outputting received signals to the diversity synthesizing means and the amplitude compensation means; OFDM demodulation means for OFDM-demodulating the output signal of the diversity synthesizing means, and further characterised in that: when the magnitudes of the signal electric power of the plurality of electric-power detecting means are the same, the amplitude-coefficient calculation means sets the amplitude compensation coefficients of the signal electric power to be 1; when the magnitudes of the signal electric power of the plurality of electric-power detecting means are different, the amplitude-coefficient calculation means sets the amplitude compensation coefficient of the largest magnitude of the signal electric power to be 1; and the amplitude-coefficient calculation means sets the square root of a value whose denominator is the largest magnitude of the signal electric power and whose numerator is the value of each signal electric power other than the signal electric power having the largest magnitude as the amplitude compensation coefficient of the corresponding signal electric power; wherein output signals of the plurality of amplitude compensation means are synthesized.

In the OFDM receiving apparatus to be described, the plurality of antennas disposed apart from each other captures OFDM-modulated signals, and the plurality of receiving means connected to the plurality of antennas, respectively, frequency-converts and outputs received signals. The diversity synthesizing means synthesizes the output signals of the plurality of receiving means, and the OFDM demodulation means OFDM-demodulates the output signal of the diversity synthesizing means. In the diversity synthesizing means, the plurality of electric-power detecting means detects the signal electric power of the output signals of the plurality of receiving means, respectively, and the amplitudes of the output signals of the plurality of receiving means are compensated according to the result of detection and then, synthesized.

According to the OFDM receiving apparatus having the above-described structure, it is necessary to calculate the amplitude coefficients proportional to signal strength in order to perform diversity synthesis which obtains the maximum C/N ratio. The signal strength may be calculated according to the signal electric power of the output signal of each receiving means. To this end, the plurality of electric-power detecting means for detecting the respective signal electric power of the output signals of the receiving means is provided. Therefore, auto-correlation detecting means which is conventionally required is not needed.

According to the OFDM receiving apparatus having the above structure, auto-correlation detecting means which includes effective-symbol-period delay means formed of a semiconductor memory as a main component is not needed. Since a semiconductor memory is not used, the circuit of the diversity synthesizing means can be formed of general-purpose logic components. Therefore, an advantage is given in which the circuit is more easily integrated into one chip or an ASIC.

In the OFDM receiving apparatus according to the present invention, the electric-power detecting means may include complex-conjugate-signal generating means for generating the complex-conjugate signal of an input signal; multiplying means for multiplying the input signal by the complex-conjugate signal; and accumulating means for accumulating the result of multiplication for a constant period.

In the electric-power detecting means of the OFDM receiving apparatus according to the present invention, the complex-conjugate-signal generating means generates the complex-conjugate signal of an input signal, the multiplying means multiplies the input signal by the complex-conjugate signal, and the accumulating means accumulates the result of multiplication for a constant period.

According to the OFDM receiving apparatus having the above structure, the electric-power detecting means includes the complex-conjugate-signal generating means, the multiplying means, and the accumulating means for accumulation. This is preferred in terms of calculating signal electric power having low noise.

In the OFDM receiving apparatus according to the present invention, the accumulating period of the accumulating means may be set to a multiple of at least the guard interval period of an OFDM signal or that of half the guard interval period.

In the OFDM receiving apparatus according to the present invention, the accumulating period of the accumulating means is set to a multiple of at least the guard interval period of an OFDM signal or that of half the guard interval period.

According to the OFDM receiving apparatus having the above structure, since the accumulating period of the accumulating means is set to a multiple of at least a half of the guard interval of an OFDM signal, signal electric power having low noise is calculated by a time averaging effect, and it is also preferred in terms of obtaining signal electric power every one OFDM symbol or every half an OFDM symbol.

In other words, since the guard interval of an OFDM signal is set to 1/n (n: an m-th power of 2 where m is an integer) of effective symbols, when the accumulating period is set to at least half the guard interval period, compensation coefficients are easily updated in units of OFDM symbols or more, or in units of halves of OFDM symbols or more.

The OFDM receiving apparatus according to the present invention may be configured such that the diversity synthesizing means compares the signal electric power detected by the plurality of electric-power detecting means, retrieves the maximum signal electric power, calculates the square root of the ratio of each signal electric power of the plurality of electric-power detecting means to the maximum signal electric power, and compensates the amplitude of each output signal of the plurality of receiving means in proportion to the square root of the ratio.

According to the OFDM receiving apparatus of the present invention, the diversity synthesizing means compares the signal electric power detected by the plurality of electric-power detecting means, retrieves the maximum signal electric power, calculates the square root of the ratio of each signal electric power of the plurality of electric-power detecting means to the maximum signal electric power, and compensates the amplitude of each output signal of the plurality of receiving means in proportion to the square root of the ratio.

According to the OFDM receiving apparatus having the above structure, to compensate the amplitudes of the output signals of the plurality of receiving means, signal electric power detected by the plurality of electric-power detecting means is compared, the maximum signal electric power is retrieved, the square root of the ratio of each signal electric power of the plurality of electric-power detecting means to the maximum signal electric power is calculated, and the amplitude of the signal received by each electric-power detecting means is compensated in proportion to the square root of the ratio. Therefore, an advantage is provided in which an output signal obtained even after diversity synthesis does not become larger than necessary and does not saturate.

### BRIEF DESCRIPTION OF THE DRAWINGS

Fig. 1 is a block diagram showing the structure of an OFDM receiving apparatus according to an embodiment of the present invention.
Fig. 2 is a block diagram showing a specific structure of diversity synthesizing means shown in Fig. 1.
Fig. 3 is a block diagram showing a specific structure of electric-power detecting means shown in Fig. 2.
Fig. 4 is a block diagram showing a specific structure of cross-correlation detecting means shown in Fig. 2.
Fig. 5 is a view showing example signal waveforms used for describing specific operation processes of the OFDM receiving apparatus according to the present embodiment of the present invention.
Fig. 6 is a block diagram showing a specific structure of electric-power detecting means in diversity synthesizing means in an OFDM receiving apparatus according to another embodiment of the present invention.
Fig. 7 is a block diagram showing a specific structure of cross-correlation detecting means in the diversity synthesizing means in the OFDM receiving apparatus according to the another embodiment of the present invention.
Fig. 8 is a block diagram showing the structure of an OFDM transmission apparatus.
Fig. 9 is an outlined view showing an OFDM modulation process.
Fig. 10 is a block diagram showing a basic structure of an OFDM receiving apparatus.
Fig. 11 is an outlined view showing an OFDM demodulation process.
Fig. 12 is a view showing the relationship between the data structure of an OFDM modulated signal and an auto-correlation detecting signal.
Fig. 13 is a block diagram showing the structure of a conventional OFDM receiving apparatus.
Fig. 14 is a block diagram showing a specific structure of diversity synthesizing means in an OFDM receiving apparatus already proposed by the present inventor.
Fig. 15 is a block diagram showing a specific structure of auto-correlation detecting means used for an operation shown in Fig. 12.

### DESCRIPTION OF THE PREFERRED EMBODIMENTS

Embodiments of the present invention will be described in detail by referring to the drawings. Fig. 1 shows the structure of an OFDM receiving apparatus according to an embodiment of the present invention. In the OFDM receiving apparatus according to the present embodiment of the present invention, it is assumed that two antennas are used. The OFDM receiving apparatus according to the present embodiment differs in structure from the conventional OFDM receiving apparatus shown in Fig. 11 in that diversity synthesizing means is disposed before effective-symbol extracting means to perform diversity synthesis before effective symbols are extracted, and only one path is used from the effective-symbol extracting means to fast Fourier transform means (FFT). The other structures are the same.

In Fig. 1, the OFDM receiving apparatus according to the present embodiment of the present invention includes an antenna 1a for capturing an OFDM-modulated signal in a path #1, an antenna 1b for capturing a signal in a path #2, receiving means 2a and 2b, a diversity synthesizing means for synthesizing the output signals of the receiving means 2a and 2b, and OFDM demodulation means 4.

The OFDM demodulation means 4 includes effective-symbol extracting means 5, serial/parallel converting means (S/P) 6, fast Fourier transform means (FFT) 7, parallel/serial converting means (P/S) 8, and demodulation means 9.

In the above structure, signals received by the antenna 1a and the antenna 1b are amplified and frequency-converted to intermediate-frequency signals or base-band signals by the receiving means 2a and 2b, and then are input to the diversity synthesizing means 3 as path-#1 and path-#2 signals and diversity-synthesized.

In the OFDM demodulation means 4, the effective-symbol extracting means 5 detects the maximum auto-correlation value in the synthesized output of the diversity synthesizing means 3 to extract an effective symbol signal. The extracted effective symbol signal is converted to a parallel signal by the serial/parallel converting means (S/P) 6. This parallel signal is Fourier-transformed by the fast Fourier transform means (FFT) 7. The Fourier-transformed signal is converted to a serial signal by the parallel/serial converting means (P/S) 8, and the serial signal is demodulated by the demodulation means 9.

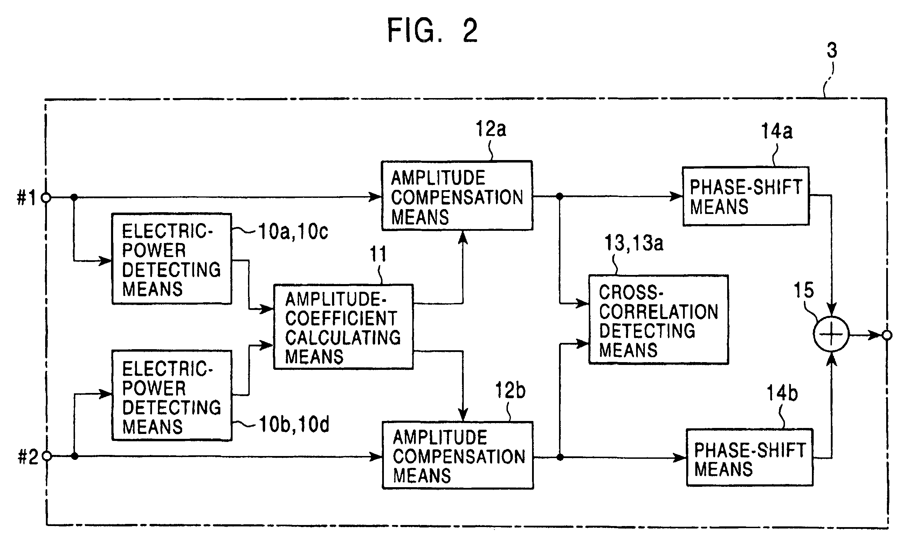

Next, Fig. 2 shows an example specific structure of the diversity synthesizing means shown in Fig. 1.

An OFDM receiving apparatus according to the present invention differs in structure from an OFDM receiving apparatus already proposed by the present inventor in that electric-power detecting means 10a and 10b and amplitude-coefficient calculating means 11 are provided instead of auto-correlation detecting means in the diversity synthesizing means. Since the other structures are the same as for the diversity synthesizing means shown in Fig. 12, descriptions for overlapping portions are omitted and only different portions will be described.

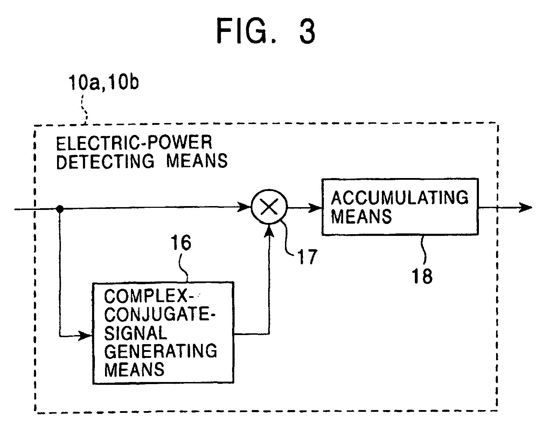

Fig. 3 shows a specific structure of the electric-power detecting means 10a (10b) shown in Fig. 2. In Fig. 3, the electric-power detecting means 10a (10b) includes complex-conjugate-signal generating means 16 for obtaining the complex conjugate of a received signal and for generating a complex-conjugate signal, and multiplying means 17 for multiplying the received signal by the complex-conjugate signal, and accumulating means 18 for accumulating the output of the multiplying means 17 for a constant period.

In the above structure, when a received signal is input from the receiving means 2a (2b) to the electric-power detecting means 10a (10b), the received signal is sent to one input end of the multiplying means 17 and to the input end of the complex-conjugate-signal generating means 16. Then, the complex-conjugate-signal generating means 16 generates the complex-conjugate signal of the received signal and sends it to the other input end of the multiplying means 17.

Every time when the multiplying means 17 receives signals at its two input ends, the multiplying means 17 multiplies them to calculate instantaneous electric power and sends it to the accumulating means 18. The accumulating means 18 accumulates the instantaneous electric power for a constant period to average the instantaneous electric power and outputs it. With this processing, the signal electric power of the input signal is calculated every constant period.

Next, the operations of the amplitude-coefficient calculating means 11 in the diversity synthesizing means 3 shown in Fig. 2 will be described. The signal electric power output from the electric-power detecting means 10a is called Pa and the signal electric power output from the electric-power detecting means 10b is called Pb. Every time when the electric-power detecting means 10a and 10b calculate signal electric power, the amplitude-coefficient calculating means 11 calculates amplitude compensation coefficients through the following steps ((1) to (3)) and outputs them to the amplitude compensation means 12a and 12b.
(1) Compare the magnitude of the signal electric power Pa and that of the signal electric power Pb.
(2-a) When the signal electric power Pa is equal to the signal electric power Pb, set amplitude compensation coefficients for the amplitude compensation means 12a and 12b to 1.
(2-b) When the signal electric power Pa is larger than the signal electric power Pb, set an amplitude compensation coefficient for the amplitude compensation means 12a to 1 and set an amplitude compensation coefficient for the amplitude compensation means 12b to the square root of Pb/Pa.
(2-c) When the signal electric power Pa is smaller than the signal electric power Pb, set an amplitude compensation coefficient for the amplitude compensation means 12a to the square root of Pb/Pa and set an amplitude compensation coefficient for the amplitude compensation means 12b to 1.
(3) Output the set amplitude compensation coefficients to the amplitude compensation means 12a and 12b.

With these steps, for the received signal having a smaller signal electric power, the square root of the signal-electric-power ratio, namely, an amplitude compensation coefficient which makes an amplitude smaller according to the ratio of the signal strengths is output to the amplitude compensation means. As described above, this amplitude compensation coefficient is used for performing diversity synthesis so as to obtain the maximum C/N ratio.

Fig. 4 shows a specific structure of cross-correlation detecting means 13. In Fig. 4, the cross-correlation detecting means 13 includes complex-conjugate-signal generating means 50 for generating and outputting the complex-conjugate signal of a signal of the two signal sent to the cross-correlation detecting means 13 and to be compared; multiplying means 51 for multiplying the complex-conjugate signal generated by the complex-conjugate-signal generating means 50 by the other signal of the two signals to be compared; accumulating means 52 for accumulating the multiplication result of the multiplying means 51 for a predetermined period; phase calculating means 53 for calculating a phase by using the result of accumulation performed by the accumulating means 52; and phase-coefficient calculating means 54 for calculating phase coefficients by using the result of phase calculation performed by the phase calculating means 53.

In the above structure, in cross-correlation detecting means 20, one signal (signal input through an input terminal 103) of two signals sent to the cross-correlation detecting means 20 through input terminals 102 and 103 and to be compared is input to the complex-conjugate-signal generating means 50. As a result, the complex-conjugate-signal generating means 50 generates and outputs the complex-conjugate signal. The complex-conjugate signal obtained by the complex-conjugate-signal generating means 50 is multiplied by the other signal of the two signals to be compared, by the multiplying means 51.

The result of multiplication performed by the multiplying means 51 is accumulated for the predetermined period by the accumulating means 52. From the result of accumulation performed by the accumulating means 52, the phase calculating means 53 calculates the phase by which compensation is to be applied. The phase-coefficient calculating means 54 calculates phase coefficients according to the phase by which compensation is to be applied, calculated by the phase calculating means 53, and outputs a phase coefficient to be set, to the phase-shift means 14a through an output terminal 104 and a phase coefficient to be set, to the phase-shift means 14b through an output terminal 105.

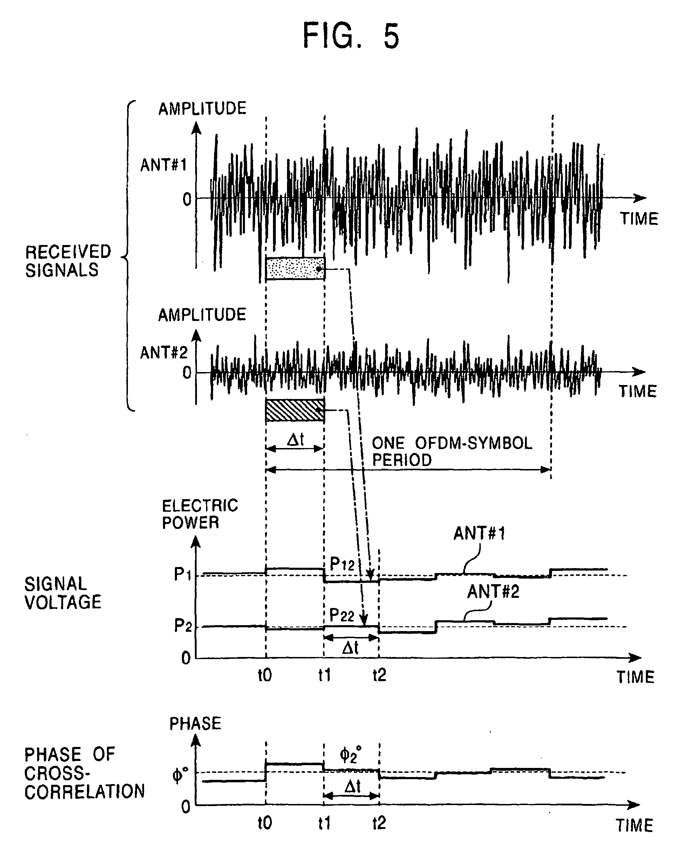

Specific operations of a main portion of the OFDM receiving apparatus according to the present embodiment of the present invention will be described by referring to Fig. 1 to Fig. 5. Fig. 5 is a view showing example signal waveforms along the time axis of received signals output from the receiving means 2a and 2b, signal electric power detected by the electric-power detecting means 10a and the electric-power detecting means 10b, and the phase of cross-correlation output from the phase calculating means 53 in the cross-correlation detecting means 13. The guard-interval period is set to one fourth the effective-symbol period, and in addition, the accumulation time Δt of the accumulating means 18 in the electric-power detecting means 10a and 10b and that of the accumulating means 52 in the cross-correlation detecting means 13 are set equal to the guard-interval period. In Fig. 5, ANT#1 indicates a signal related to the receiving antenna 1a and the receiving means 2a, and ANT#2 indicates a signal related to the receiving antenna 1b and the receiving means 2b.

When the receiving means 2a and 2b output the received signals indicated by ANT#1 and ANT#2, the electric-power detecting means 10a and 10b in the diversity synthesizing means 3 output signal electric power averaged every Δt to the amplitude-coefficient calculating means 11. For example, the electric-power detecting means 10a and 10b accumulate the instantaneous signal electric power of the input received electric power for Δt from time to t0 time t1, and output P₁₂ and P₂₂ to the amplitude-coefficient calculating means 11 at time t1 as signal electric power. After time t1, the electric-power detecting means 10a and 10b calculate signal electric power every Δt and output to the amplitude-coefficient calculating means 11 in the same way.

In this example, since the signal electric power of the received signals output from the receiving means 2a and 2b does not fluctuate much along the time axis, the electric power has almost the same values as P₁ and P₂.

When the electric-power detecting means 10a inputs P₁₂ to the amplitude-coefficient calculating means 11 as signal electric power and the electric-power detecting means 10b inputs P₂₂ to the amplitude-coefficient calculating means 11 as signal electric power, the amplitude-coefficient calculating means 11 compares both of the signal electric power. In this example, since P₁₂ is larger than P₂₂ as shown in Fig. 5, the amplitude-coefficient calculating means 11 sets an amplitude compensation coefficient for the amplitude compensation means 12a to 1 and an amplitude compensation coefficient for the amplitude compensation means 12b to the square root of P₂₂/P₁₂, and outputs them to the amplitude compensation means 12a and 12b.

The amplitude compensation means 12a and 12b multiply the received signals by the given amplitude compensation coefficients, and outputs the results to the phase-shift means 14a and 14b, and also to the cross-correlation detecting means 13.

In the cross-correlation detecting means 13, the output signal (ANT#1) of the amplitude compensation means 12a is input to one input end of the multiplying means 51 through the input terminal 102, and the output signal (ANT#2) of the amplitude compensation means 12b is input to the other input end of the multiplying means 51 through the input terminal 103 via the complex-conjugate-signal generating means 50. In this case, ANT#2 serves as a phase reference.

Receiving the above-described signals, the multiplying means 51 calculates instantaneous cross-correlation, and the accumulating means 52 accumulates the result of multiplication for Δt to calculate cross correlation and outputs it to the phase calculating means 53.

The phase calculating means 53 receives cross-correlation every Δt, calculates the phase thereof, and outputs to the phase-compensation-coefficient calculating means 54. The phase calculated by the phase-compensation-coefficient calculating means 54 is the phase difference between the signal ANT#1 and the signal ANT#2 with the signal ANT#2 being used as a phase reference.

For example, when the accumulating means 52 accumulates instantaneous cross-correlation for Δt from time t0 to time t1 and calculates cross-correlation at time t1, the phase calculating means 53 calculates the phase φ₂° thereof and outputs it to the phase-coefficient calculating means 54. As shown in Fig. 5, φ₂° is a positive value and it indicates that the phase of the signal ANT#1 is faster than that (phase reference) of the signal ANT#2 by φ₂°.

The phase-coefficient calculating means 54 calculates a coefficient for delaying (rotating) the phase of the signal ANT#1 by φ₂°. More specifically, the phase-shift means 14a (Fig. 2) calculates a phase compensation coefficient by (cos(-φ₂°), sin(-φ₂°)) and outputs it. Since the signal ANT#2 serves as the phase reference, phase compensation is not applied to the signal ANT#2. In other words, a phase compensation coefficient of (1, 0) is output from the phase-shift means 14b.

A phase compensation coefficient (x, y) indicates a complex number, x is its real part, and y is its imaginary part. When the phase-shift means 14a and 14b shift the phases by using the above-described phase compensation coefficients, the phases of the output signals of the phase-shift means 14a and 14b are made equal at their output ends.

After the amplitude compensation means 12a and 12b compensate the amplitudes, and in addition, the phase-shift means 14a and 14b compensate the phases, as described above, when the adder means 15 adds the received signals ANT#1 and ANT#2, the C/N ratio of the OFDM signal becomes maximum at its output end.

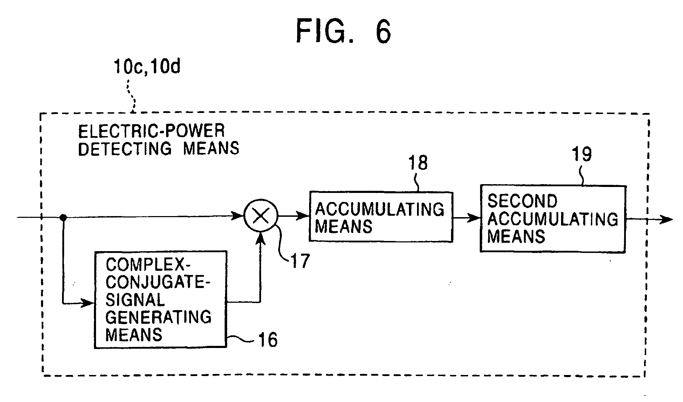

An OFDM receiving apparatus according to another embodiment of the present invention will be next described. The OFDM receiving apparatus according to the another embodiment of the present invention basically has the same structure as the OFDM receiving apparatus shown in Fig. 1, but specific structures of electric-power detecting means and cross-correlation detecting means included in diversity synthesizing means 3 differ. Fig. 6 shows specific structures of electric-power detecting means 10c and 10d included in the diversity synthesizing means 3 of the OFDM receiving apparatus according to the another embodiment of the present invention.

The electric-power detecting means 10c and 10d differ in structure from the electric-power detecting means 10a and 10b shown in Fig. 6 in that second accumulating means 19 is provided at the output end of accumulating means 18, and the output thereof serves as the output of the electric-power detecting means 10c and 10d. The second accumulating means 19 further accumulates the signal electric power output from the accumulating means 18 by a predetermined number, and outputs signal electric power averaged for a longer period.

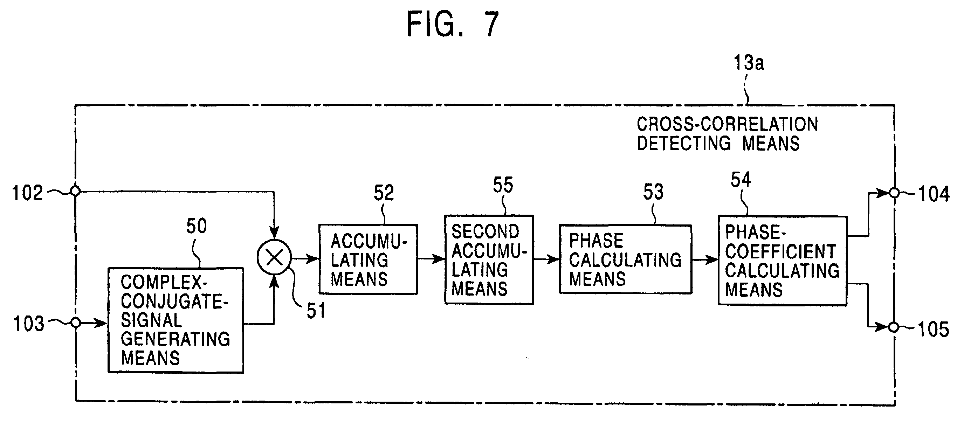

Fig. 7 shows a specific structure of cross-correlation detecting means 13a according to the another embodiment of the present invention. The cross-correlation detecting means 13a of the another embodiment differs in structure from the cross-correlation detecting means 13 shown in Fig. 4 in that second accumulating means 55 is provided between the output end of accumulating means 52 and the input end of phase calculating means 53. The second accumulating means 55 further accumulates the cross-correlation value output from the accumulating means 52 every time when a constant accumulation period elapses, by a predetermined number, and outputs a cross-correlation value averaged for a longer period.

Since the diversity synthesizing means 3 according to the present embodiment is provided with the above-described electric-power detecting means 10c and 10d and the cross-correlation detecting means 13a, the update period of amplitude coefficients becomes long in the amplitude-coefficient calculating means 11, but the amplitude coefficients are calculated according to signal electric power from which noise components are more removed. The same conditions also apply to phase coefficients output from the cross-correlation detecting means 13a. As a result, a synthesized signal output from the diversity synthesizing means 3 has low noise.

When the guard interval of an OFDM signal is 1/n (n: an m-th power of 2 where m is an integer), and the accumulating period of the accumulating means 18 in the electric-power detecting means 10c and 10d and the accumulating period of the accumulating means 52 in the cross-correlation detecting means 13a are both set to the same period as the guard interval, if the number of accumulations is set to (n + 1) in the second accumulating means 19 and the second accumulating means 55, an advantage is provided in which compensation coefficients are updated with one OFDM symbol being used as a time unit.

In the specific example shown in Fig. 5, for example, since the guard interval is set to one fourth, if the second accumulating means accumulates five results of accumulations performed by the accumulating means 18 and the accumulating means 52, an advantage is given in which coefficients are updated every one OFDM symbol.

When the accumulating periods of the accumulating means 18 and the accumulating means 52 are set to a half of the guard interval period, if the second accumulating means accumulates (n + 1) results of accumulations performed thereby, an advantage is provided in which coefficients are updated for half an OFDM symbol.

In each embodiment of the present invention, the amplitude of a received signal is compensated and then the phase thereof is compensated. The present invention is not limited to this case. Compensation may be performed such that the phase of a received signal is compensated first, and then, the amplitude thereof is compensated.

In each embodiment of the present invention, the cross-correlation detecting means 13 (13a) receives the output signals of the amplitude compensation means 12a and 12b as two input signals. The present invention is not limited to this case. The cross-correlation detecting means 13 may receive the outputs of the receiving means 2a and 2b, like the electric-power detecting means 10a and 10b (10c and 10d).

In addition, in each embodiment of the present invention, two antennas are used. The present invention is not limited to this case. Three antennas or more may be used.

## Claims

1. An OFDM receiving apparatus comprising:
a plurality of antennas (1a, 1b) disposed apart from each other for capturing OFDM-modulated signals;
diversity synthesizing means (3) for synthesizing the output signals of the plurality of antennas; and
wherein the diversity synthesizing means comprises a plurality of electric-power detecting means (10a-d) for detecting a signal electric power (Pa, Pb) of the output signals of the plurality of antennas, respectively; wherein the diversity synthesizing means further comprises
amplitude-coefficient calculation means (11) for receiving the signal electric power from the plurality of electric-power detecting means and for calculating amplitude compensation coefficients corresponding to the magnitudes of the signal electric power from the plurality of electric-power detecting means every time the signal * electric power is detected by the plurality of electric-power detecting means so as to output the calculated amplitude compensation coefficients; and wherein the diversity synthesizing means further comprises
a plurality of amplitude compensation means (12a, 12b) for receiving the output signals of the plurality of receiving means and the calculated amplitude compensation coefficients, wherein the OFDM receiving apparatus is **characterised by** a plurality of receiving means (2a, 2b) connected to the plurality of antennas, respectively, for frequency-converting and outputting received signals to the diversity synthesizing means (3) and the amplitude compensation means (12a, 12b); OFDM demodulation means (4) for OFDM-demodulating the output signal of the diversity synthesizing means,
and further **characterised in that**:
when the magnitudes of the signal electric power of the plurality of electric-power detecting means are the same, the amplitude-coefficient calculation means sets the amplitude compensation coefficients of the signal electric power to be 1;
when the magnitudes of the signal electric power of the plurality of electric-power detecting means are different, the amplitude-coefficient calculation means sets the amplitude compensation coefficient of the largest magnitude of the signal electric power to be 1; and
the amplitude-coefficient calculation means sets the square root of a value whose denominator is the largest magnitude of the signal electric power and whose numerator is the value of each signal electric power other than the signal electric power having the largest magnitude as the amplitude compensation coefficient of the corresponding signal electric power;
wherein output signals of the plurality of amplitude compensation means are synthesized.

2. An OFDM receiving apparatus according to Claim 1, wherein each of the plurality of electric-power detecting means comprises:
complex-conjugate-signal generating means (16) for generating the complex-conjugate signal of an input signal;
multiplying means (17) for multiplying the input signal by the complex-conjugate signal; and
accumulating means (18) for accumulating the result of multiplication for a constant period.

3. An OFDM receiving apparatus according to Claim 2, wherein the accumulating period of the accumulating means is set to a multiple of at least the guard interval period of an OFDM signal or that of half the guard interval period.

## Patentansprüche

1. OFDM-Empfangsvorrichtung mit:
einer Mehrzahl von getrennt voneinander angeordneten Antennen (1a, 1b) zum Einfangen OFDM-modulierter Signale;
einer Diversitätssynthesizereinrichtung (3) zum Generieren der Ausgangssignale der Mehrzahl von Antennen; und
wobei die Diversitätssynthesizereinrichtung eine Mehrzahl von Detektionseinrichtungen für elektrische Leistung (10a-d) umfasst, jeweils zum Detektieren einer elektrischen Signalleistung (Pa, Pb) der Ausgangssignale der Mehrzahl von Antennen;
wobei die Diversitätssynthesizereinrichtung ferner umfasst eine Amplitudenkoeffizienten-Berechnungseinrichtung (11) zum Empfangen der elektrischen Signalleistung von der Mehrzahl von Detektionseinrichtungen für elektrische Leistung und zum Berechnen von Amplituden-Kompensationskoeffizienten, die den Größen der elektrischen Signalleistung von der Mehrzahl von Detektionseinrichtungen für elektrische Leistung entsprechen, immer wenn die elektrische Signalleistung durch die Mehrzahl von Detektionseinrichtungen für elektrische Leistung detektiert wird, um die berechneten Amplituden-Kompensationskoeffizienten auszugeben;
und wobei die Diversitätssynthesizereinrichtung ferner umfasst eine Mehrzahl von Amplituden-Kompensationseinrichtungen (12a, 12b) zum Empfangen der Ausgangssignale der Mehrzahl von Empfangseinrichtungen und der berechneten Amplituden-Kompensationskoeffizienten,
wobei die OFDM-Empfangsvorrichtung **gekennzeichnet ist durch** eine Mehrzahl von Empfangseinrichtungen (2a, 2b), die mit der Mehrzahl von Antennen verbunden sind, zum Frequenzwandeln und Ausgeben empfangener Signale an die Diversitätssynthesizereinrichtung (3) und die Amplituden-Kompensationseinrichtung (12a, 12b); eine OFDM-Demodulationseinrichtung (4) zum OFDM-Demodulieren des Ausgangssignals der Diversitätssynthesizereinrichtung,
und ferner **dadurch gekennzeichnet, dass**:
wenn die Größen der elektrischen Signalleistung der Mehrzahl von Detektionseinrichtungen für elektrische Leistung gleich sind, setzt die Amplitudenkoefizienten-Berechnungseinrichtung die Amplituden-Kompensationskoeffizienten der elektrischen Signalleistung auf 1;
wenn die Größen der elektrischen Signalleistung der Mehrzahl von Detektionseinrichtungen für elektrische Leistung verschieden sind, setzt die Amplitudenkoeffizienten-Berechnungseinrichung den Amplituden-Kompensationskoeffizienten der elektrischen Signalleistung der größten Größe der elektrischen Signalleistung auf 1; und
die Amplitudenkoeffizienten-Berechnungseinrichtung setzt die Quadratwurzel eines Wertes, dessen Nenner die größte Größe der elektrischen Leistung ist und dessen Zähler der Wert jeder von der elektrischen Signalleistung mit der größten Größe verschiedenen elektrischen Signalleistung ist, als den Amplituden-Kompensationskoeffizienten der entsprechenden elektrischen Signalleistung;
wobei Ausgangssignale der Mehrzahl von Amplituden-Kompensationseinrichtungen generiert werden.

2. OFDM-Empfangsvorrichtung nach Anspruch 1, wobei jede der Mehrzahl von Detektionseinrichtungen für elektrische Leistung umfasst:
eine Erzeugungseinrichtung für konjugiert komplexe Signale (16) zum Erzeugen des konjugiert komplexen Signals eines Eingangssignals;
eine Multipliziereinrichtung (17) zum Multiplizieren des Eingangssignals mit dem konjugiert komplexen Signal; und
eine Aufsummiereinrichtung (18) zum Aufsummieren des Multiplikationsergebnisses für eine konstante Periode.

3. OFDM-Empfangsvorrichtung nach Anspruch 2, wobei die Aufsummierperiode der Aufsummiereinrichtung gleich einem Vielfachen wenigstens der Schutzintervall-Periode eines OFDM-Signals oder derhalben Schutzintervall-Periode gesetzt wird.

## Revendications

1. Appareil de réception multiplexeur à répartition en fréquence orthogonale (MRFO ou « OFDM » pour les anglo-saxons) comprenant :
une pluralité d'antennes (1a, 1b) disposées séparées les unes des autres pour capturer des signaux MRFO modulés ;
une diversité de moyens de synthétisation (3) pour synthétiser les signaux de sortie de la pluralité d'antennes ; et
dans lequel la diversité de moyens de synthétisation comprend une pluralité de moyens de détection de puissance électrique (10a-d) pour détecter une puissance de signal (Pa, Pb) des signaux de sortie de la pluralité d'antennes, respectivement ; dans lequel la diversité de moyens de synthétisation comprend en outre
des moyens de calcul de coefficient d'amplitude (11) pour recevoir la puissance électrique du signal provenant de la pluralité des moyens de détection de puissance électrique et pour calculer des coefficients de compensation d'amplitude correspondant aux magnitudes de la puissance électrique du signal provenant de la pluralité des moyens de détection de puissance électrique chaque fois que la puissance électrique du signal est détectée par la pluralité des moyens de détection de puissance électrique, de façon à sortir les coefficients de compensation d'amplitude calculés; et dans lequel la diversité de moyens de synthétisation comprend en outre
une pluralité de moyens de compensation d'amplitude (12a, 12b) pour recevoir les signaux de sortie de la pluralité de moyens de réception et les coefficients de compensation d'amplitude calculés, dans lequel l'appareil de réception multiplexeur à répartition en fréquence orthogonale (MRFO) est **caractérisé par** une pluralité de moyens de réception (2a, 2b) connectés à la pluralité d'antennes, respectivement, pour convertir des fréquences et sortir des signaux reçus à la diversité de moyens de synthétisation (3) et aux moyens de compensation d'amplitude (12a, 12b) ; des moyens de démodulation de MRFO (4) pour démoduler le signal de sortie de la diversité de moyens de synthétisation,
et en outre **caractérisé en ce que** :
lorsque les magnitudes de la puissance électrique du signal des moyens de détection de puissance électrique sont les mêmes, les moyens de calcul du coefficient d'amplitude fixent à 1 les coefficients de compensation d'amplitude de la puissance électrique du signal ;
lorsque les magnitudes de la puissance électrique du signal des moyens de détection de puissance électrique sont différents, les moyens de calcul du coefficient d'amplitude fixent à 1 les coefficients de compensation d'amplitude de la plus grande amplitude de la puissance électrique du signal ; et
les moyens de calcul du coefficient d'amplitude fixent la racine carré d'une fraction, dont le dénominateur est la plus grande amplitude de la puissance électrique du signal et dont le numérateur est la valeur de chaque puissance électrique du signal autre que la puissance électrique du signal ayant la plus grande magnitude, comme étant le coefficient de compensation d'amplitude de la puissance électrique du signal correspondant ;
dans lequel les signaux de sortie de la pluralité des moyens de compensation d'amplitude sont synthétisés.

2. Appareil de réception multiplexeur à répartition en fréquence orthogonale (MRFO) selon la revendication 1, dans lequel chacun de la pluralité des moyens de détection de puissance électrique comprend :
des moyens de génération d'un signal complexe conjugué (16) pour générer un signal complexe conjugué d'un signal d'entrée ;
des moyens multiplicateurs (17) pour multiplier le signal d'entrée par le signal complexe conjugué ; et
des moyens d'accumulation (18) pour accumuler le résultat de la multiplication sur une période constante.

3. Appareil de réception multiplexeur à répartition en fréquence orthogonale (MRFO) selon la revendication 2, dans lequel la période d'accumulation des moyens d'accumulation est fixée à un multiple d'au moins la période d'intervalle de garde d'un signal MRFO ou celui de la moitié de la période d'intervalle de garde.
